# EUROPÄISCHE PATENTSCHRIFT

(11) **EP 4 121 950 B1**
(45) Veröffentlichungstag und Bekanntmachung des Hinweises auf die Patenterteilung: **15.04.2026**
(21) Anmeldenummer: 21786815.7
(22) Anmeldetag: 29.09.2021
(51) Int. Cl.: G06V 10/44, G06V 10/774

(54) **VERFAHREN ZUM ANALYSIEREN EINES BAUTEILS, VERFAHREN ZUM TRAINIEREN EINES SYSTEMS, VORRICHTUNG, COMPUTERPROGRAMM UND COMPUTERLESBARES SPEICHERMEDIUM**
METHOD FOR ANALYZING A COMPONENT, METHOD FOR TRAINING A SYSTEM, DEVICE, COMPUTER PROGRAM AND COMPUTER-READABLE STORAGE MEDIUM
PROCÉDÉ D'ANALYSE D'UN COMPOSANT, PROCÉDÉ D'ENTRAÎNEMENT D'UN SYSTÈME, DISPOSITIF, PROGRAMME INFORMATIQUE ET SUPPORT DE STOCKAGE LISIBLE PAR ORDINATEUR

(30) Priorität: 07.10.2020 DE 102020126291
(43) Veröffentlichungstag der Anmeldung: 25.01.2023
(73) Patentinhaber: Fujitsu Germany GmbH, 80807 München (DE)
(72) Erfinder: SPITZER, Philipp, 80807 München (DE); SHULKIN, Dimitrij, 80807 München (DE); NAUJECK, Marcel, 80807 München (DE); SCHIFFER, Stefan, 80807 München (DE)
(74) Vertreter: Epping - Hermann - Fischer
(86) Internationale Anmeldenummer: PCT/EP2021/076841
(87) Internationale Veröffentlichungsnummer: WO 2022/073827

(56) Entgegenhaltungen:
- CN-A- 110 766 660
- US-A1- 2017 039 456
- US-B2- 9 805 305
- FERNANDES EVERLANDIO ET AL: "An Ensemble of Convolutional Neural Networks for Unbalanced Datasets: A case Study with Wagon Component Inspection", 2018 INTERNATIONAL JOINT CONFERENCE ON NEURAL NETWORKS (IJCNN), IEEE, 8 July 2018 (2018-07-08), pages 1 - 6, XP033419232, DOI: 10.1109/IJCNN.2018.8489423
- CYGANEK BOGUSLAW: "Object Detection and Recognition in Digital Images", 5 August 2013 (2013-08-05), pages 1 - 552, XP055881125, Retrieved from the Internet <URL:https://books.google.nl/books?id=upsxI3bOZvAC&printsec=frontcover&dq=Cyganek+object+detection&hl=en&sa=X&redir_esc=y#v=onepage&q=Cyganek%20object%20detection&f=false> [retrieved on 20220119]

## Beschreibung

Die vorliegende Erfindung betrifft ein Verfahren zum Analysieren eines Bauteils. Des Weiteren betrifft die Erfindung ein Verfahren zum Trainieren eines Systems zum Analysieren eines Bauteils. Außerdem betrifft die Erfindung eine Vorrichtung zum Analysieren eines Bauteils und eine Vorrichtung zum Trainieren eines Systems zum Analysieren eines Bauteils. Darüber hinaus betrifft die Erfindung ein Computerprogramm und ein computerlesbares Speichermedium.

Bauteile, die beispielsweise maschinell hergestellt werden, können zum Beispiel an ihren Oberflächen oder im Inneren Merkmale aufweisen. Bei diesen Merkmalen kann es sich um gewollte Strukturen, wie beispielsweise eine Gravur oder Ähnliches handeln, oder um einen Defekt des Bauteils. Ein Defekt an einer Oberfläche oder im Inneren eines solchen Bauteils kann den Wert des Bauteils erheblich mindern oder dieses gar unbrauchbar machen. Werden solche Defekte nicht erkannt, können diese auch ein erhebliches Sicherheitsrisiko darstellen. Aus diesem Grund ist es notwendig, derartige Merkmale an den Oberflächen oder im Inneren solcher Bauteile zuverlässig zu erkennen und gegebenenfalls unterschiedliche Arten von Merkmalen voneinander zu unterscheiden.

Ein solches Erkennen von Merkmalen wird beispielsweise durch einen Experten durchgeführt. Dies ist jedoch sehr zeitaufwendig und kann, aufgrund menschlicher Fehler, erheblich schwankende Ergebnisse liefern. Bei einem maschinellen Erkennen von solchen Merkmalen ist es heutzutage problematisch, dass keine ausreichend hohe Zuverlässigkeit bei der Merkmalserkennung gegeben ist. Dies hat zur Folge, dass zahlreiche Bauteile als mit einem Merkmal behaftet aussortiert werden, wenn Systeme zum Erkennen dieser Merkmale derart sensibel eingestellt sind, dass möglichst keine fehlerhaften Bauteile unentdeckt bleiben. Dies führt zu einem hohen Ausschuss an derartigen Bauteilen, was hohe Kosten und Materialverschwendung verursacht.

Eine Aufgabe der vorliegenden Erfindung ist es, die oben genannten Probleme zu lösen oder zu mindern.

CN 110766660 A beschreibt ein System zur Erkennung und Klassifizierung von Defekten in integrierten Schaltkreisen auf der Grundlage eines fusionierten Deep-Learning-Modells, das die Verwendung eines Fusionsmodells auf der Grundlage eines tiefen Faltungsneuronalen Netzwerks (CNN) zur automatischen Identifizierung und Klassifizierung von Wafer-Defektbildern vorschlägt. Das Kernstück des Verfahrens ist eine Methode zur Extraktion von Defektbildern, die aus zwei Deep-Learning-Modellen besteht, die Lernmechanismen einbeziehen. Dieses tiefe CNN-Fusionsmodell erstellt ein kombiniertes 3 Defektbild-Klassifizierungsmodell auf der Grundlage von zwei Frameworks: SE_lnception_V4 und SE_lnception_ResNet_V2. Der Algorithmus zur sequenziellen Modelloptimierung (SMBO) wird zur Optimierung der Hyperparameter des Fusions-Tiefen-CNN-Erkennungsmodells verwendet, um die Erkennungsgenauigkeit des Modells zu verbessern.

Das Paper "An Ensemble of Convolutional Neural Networks for Unbalanced Datasets: A case Study with Wagon Component Inspection" von Fernandes et al. schlägt eine Methode vor, die den Einsatz eines Ensembles von Convolutional Neural Networks (CNN) mit unausgewogenem Lernen kombiniert, um die Herausforderung des maschinellen Lernens zur Identifizierung defekter Eisenbahnkomponenten zu meistern.

Die Aufgabe wird gelöst durch die Merkmale der unabhängigen Patentansprüche. Vorteilhafte Ausgestaltungen sind in den Unteransprüchen gekennzeichnet.

Gemäß einem ersten Aspekt der Erfindung umfasst ein Verfahren zum Analysieren eines Bauteils mittels einem gemäß dem Verfahren gemäß des unten beschriebenen zweiten Aspekts trainierten Systems die folgenden Schritte:
- Empfangen eines Bildes des Bauteils;
- Durchführen einer Merkmalserkennung an dem empfangenen Bild mittels einer Mehrzahl von neuronalen Netzen, wobei wenigstens ein erstes neuronales Netz der Mehrzahl von neuronalen Netzen basierend auf einem ersten Satz von Trainingsbildern gemäß dem zweiten Aspekt trainiert ist, wenigstens ein zweites neuronales Netz der Mehrzahl von neuronalen Netzen basierend auf wenigstens einem zweiten Satz von Trainingsbildern gemäß dem zweiten Aspekt trainiert ist, und das wenigstens eine erste neuronale Netz und das wenigstens eine zweite neuronale Netz jeweils eine Global-Pooling Schicht aufweisen; und
- Anzeigen eines Ergebnisses der Merkmalserkennung mit Bezug zu einer Darstellung des Bauteils, wobei erkannte Merkmale bezüglich der Oberfläche oder bezüglich dem Inneren des Bauteils lokalisiert angezeigt werden.

Mit dem hier aufgezeigten Verfahren ist es möglich, anhand eines aufgenommenen Bildes, Merkmale an einer Oberfläche oder im Inneren des Bauteils mit sehr hoher Zuverlässigkeit zu erfassen und diese Merkmale zu visualisieren. Bei den Merkmalen handelt es sich beispielsweise um Defekte an der Oberfläche oder im Inneren des Bauteils. Alternativ oder zusätzlich kann es sich bei den Merkmalen auch um gewollte Oberflächenstrukturen, wie beispielsweise Gravuren oder sonstiges handeln.

Als Global-Pooling Schicht eignet sich hierbei beispielsweise eine Global-Average-Pooling Schicht. Alternativ kann aber auch beispielsweise eine Global-Maximum-Pooling Schicht oder eine Global-Minimum-Pooling Schicht verwendet werden.

Das wenigstens eine erste neuronale Netz und/oder das wenigstens eine zweite neuronale Netz sind beispielsweise convolutional neural networks (CNNs). Die Global-Pooling Schicht ist vorteilhafter Weise eine erste der letzten convolutional Schicht folgende Schicht.

Vorteilhaft bei dem Verfahren gemäß dem ersten Aspekt ist es, dass ein maschinelles Erkennen dieser Merkmale mit einer hohen Erkennungsrate gegeben ist. Das Durchführen der Merkmalserkennung mit wenigstens zwei trainierten neuronalen Netzen liefert diese hohe Zuverlässigkeit beim Erkennen der Merkmale. Somit lässt sich das oben beschriebene Verfahren insbesondere auch für Bauteile einsetzen, bei denen ein Erkennen von Defekten oder sonstigen Merkmalen kompliziert ist. Dies ist beispielsweise bei mittels einem Druckgussverfahren hergestellten Bauteilen der Fall. Bauteile, die mittels Druckgussverfahren hergestellt sind, weisen mitunter nur schwer erkennbare Defekte oder sonstige Merkmale auf. Ähnliches gilt aber ebenfalls für sonstig hergestellte Bauteile. Die hier untersuchten Bauteile können beispielsweise aus Plastik, Metall, Keramik, Glas oder sonstigen Werkstoffen bestehen. Bei solchen Merkmalen handelt es sich beispielsweise um Merkmale, die an einer Oberfläche des Bauteils, mittels eines Fotos oder einer sonstigen Abbildung der Oberfläche des Bauteils, oder im Inneren, mit entsprechenden bildgebenden Verfahren wie Röntgenaufnahmen oder Ultraschallaufnahmen, erkennbar sind. Mit dem hier gezeigten Verfahren sind auch solche schwer erkennbaren Defekte mit hoher Zuverlässigkeit auffindbar.

Ein weiterer Vorteil des Verfahrens gemäß dem ersten Aspekt liegt darin, dass nicht nur Merkmale erkannt werden, sondern auch ein Ergebnis der Erkennung von Merkmalen mit Bezug zur Oberfläche oder einer entsprechenden Abbildung des Inneren des Bauteils angezeigt wird. Mit anderen Worten, die Merkmale, welche an der Oberfläche oder im Inneren des Bauteils erkannt werden, werden bezüglich der Oberfläche oder der Abbildung des Inneren des Bauteils lokalisiert und dementsprechend angezeigt. Auf diese Weise kann ein Nutzer des oben gezeigten Verfahrens unmittelbar erkennen, an welcher Stelle des Bauteils sich ein Merkmal befindet. Dies ermöglicht eine schnelle, zeitsparende Untersuchung von Bauteilen und eine entsprechende zuverlässige, schnelle Qualitätssicherung.

Das Verfahren gemäß dem ersten Aspekt ist ein computerimplementiertes Verfahren.

In wenigstens einer Ausgestaltung wird zum Anzeigen des Ergebnisses der Merkmalserkennung ein Verfahren zum Darstellen von mittels neuronaler Netze berechneten Wahrscheinlichkeiten verwendet. Insbesondere wird ein Class-Activation-Mapping Verfahren verwendet.

Die berechneten Wahrscheinlichkeiten in dieser Ausgestaltung geben an, wie hoch die Wahrscheinlichkeit ist, dass an einer entsprechenden Stelle, für die die Wahrscheinlichkeit angegeben wird, ein Merkmal vorliegt oder nicht. Mit anderen Worten, die Darstellung der Wahrscheinlichkeiten gibt an, welche Bereiche des untersuchten Bildes eine Aufmerksamkeit des wenigstens eine erste bzw. wenigstens eine zweite neuronale Netzes erregen. Obwohl die neuronalen Netze nur eine Klassifizierung eines abgebildeten Teils des Bauteils durchführen, d.h. erkennen, ob Strukturen an der Oberfläche oder im Inneren als Merkmale erfasst werden oder nicht, lässt sich auf diese Weise auch darstellen, wo sich die Bereiche mit Merkmalen befinden.

Ein Vorteil hierbei ist es, dass selbst mit neuronalen Netzen, die lediglich für eine Klassifizierung trainiert wurden, eine grafische Darstellung der lokalen Anordnungen von Merkmalen ermöglicht wird.

In wenigstens einer Ausgestaltung wird wenigstens ein Teil des empfangenen Bildes vor oder während dem Schritt des durchführen der Merkmalserkennung augmentiert.

Das Augmentieren in diesem Zusammenhang bezeichnet ein Abbilden des wenigstens einen Teils des empfangenen Bildes in einer anderen Form und umfasst beispielsweise ein Drehen, ein Spiegeln, oder ein Anwenden eines Filters auf den wenigstens einen Teil des empfangenen Bildes.

Ein Vorteil hierbei ist es, dass auf diese Weise zuverlässigere Ergebnisse bei der Merkmalserkennung erzielt werden können. Beispielsweise können auf diese Weise Schattierungen und Spiegelungen an der Oberfläche oder sonstige Beeinträchtigungen von Aufnahmen, auch solcher des Inneren des Bauteils von Merkmalen besser unterschieden werden.

In wenigstens einer Ausgestaltung wird das empfangene Bild des Bauteils ferner dazu verwendet, wenigstens eines der Mehrzahl von neuronalen Netzen weiter zu trainieren.

Das empfangene Bild kann sowohl zum Trainieren des wenigstens einen ersten neuronalen Netzes und/oder zum Trainieren des wenigstens einen zweiten neuronalen Netzes verwendet werden. Ein Vorteil hierbei ist es, dass auf diese Weise die neuronalen Netze weiter trainiert werden können, um verbesserte Ergebnisse bei der Merkmalserkennung zu erzielen. Dies ermöglicht ein selbstständiges Erweitern der neuronalen Netze ohne Experten. Hierfür wird beispielsweise ein sogenanntes "semi-supervised-learning" verwendet.

In wenigstens einer Ausgestaltung wird das empfangen Bild vor dem Schritt des Durchführens der Merkmalserkennung in eine Mehrzahl von Bildsektionen unterteilt.

Diese einzelnen Bildsektionen können anschließend einzeln mit der Merkmalserkennung verwertet werden. Vorteilhaft hierbei ist es, dass eine Rechenleistung für das Verarbeiten der Bildsektionen im Vergleich zu dem gesamten aufgenommenen Bild reduziert werden kann. Auf diese Weise wird Rechenleistung gespart. Ferner wird auf diese Weise Verarbeitungszeit eingespart. Des Weiteren erlaubt dies ein genaueres Detektieren und insbesondere eine genauere Lokalisierung der Merkmale in dem empfangenen Bild.

Gemäß einem zweiten Aspekt der Erfindung umfasst ein Verfahren zum Trainieren eines Systems zum Analysieren eines Bauteils die folgenden Schritte:
- Erstellen eines ersten Satzes von Trainingsbildern, wobei der erste Satz Trainingsbilder umfasst, welche wenigstens einen Teil von wenigstens einem Bauteil zeigen und erkennbare Merkmale an dem wenigstens einen Bauteil in den Trainingsbildern des ersten Satzes markiert sind;
- Trainieren wenigstens eines ersten neuronalen Netzes basierend auf dem ersten Satz von Trainingsbildern, wobei das wenigstens eine erste neuronale Netz eine Global-Pooling Schicht aufweist;
- Erstellen wenigstens eines zweiten Satzes von Trainingsbildern, wobei der wenigstens eine zweite Satz Trainingsbilder umfasst, in denen Merkmale an wenigstens einem Bauteil von dem wenigstens einen ersten neuronalen Netz nicht korrekt erfasst wurden;
- Trainieren wenigstens eines zweiten neuronalen Netzes basierend auf dem wenigstens einen zweiten Satz von Trainingsbildern, wobei das wenigstens eine zweite neuronale Netz eine Global-Pooling Schicht aufweist und erkennbare Merkmale auf den Trainingsbildern des zweiten Satzes von Trainingsbildern markiert sind oder Bildsektionen der Trainingsbilder, die ein erkennbares Merkmal aufweisen, entsprechenden Merkmalsklassen zugeordnet sind;
- Zusammenfassen des wenigstens einen ersten neuronalen Netzes und des wenigstens einen zweiten neuronalen Netzes zu einer Mehrzahl von neuronalen Netzen.

Als Global-Pooling Schicht eignet sich hierbei beispielsweise eine Global-Average-Pooling Schicht. Alternativ kann aber auch beispielsweise eine Global-Maximum-Pooling Schicht oder eine Global-Minimum-Pooling Schicht verwendet werden.

Das wenigstens eine erste neuronale Netz und/oder das wenigstens eine zweite neuronale Netz sind beispielsweise convolutional neural networks (CNNs). Die Global-Pooling Schicht ist vorteilhafter Weise eine erste der letzten convolutional Schicht folgende Schicht.

Vorteilhaft bei dem Verfahren gemäß dem zweiten Aspekt ist es, dass ein System zum Analysieren von Bauteilen trainiert wird, die eine besonders hohe Erkennungsrate bei einem Analysieren derartiger Bauteile erreichen. In den Trainingsbildern des ersten Satzes von Trainingsbildern sind Merkmale an dem wenigstens einen Bauteil, das in den Trainingsbildern gezeigt ist, markiert. Mit anderen Worten, zusammen mit entsprechenden Bilddateien ist hinterlegt, wo sich in diesen Bildern Merkmale befinden. Man spricht hierbei auch von "gelabelten" Bildern (von engl. "to label" = markieren). Durch ein Trainieren des wenigstens einen ersten neuronalen Netzes mit diesen Trainingsbildern wird wenigstens ein erstes neuronales Netz erzeugt, welches mit einer relativ hohen Wahrscheinlichkeit Merkmale erfasst.

Der wenigstens eine zweite Satz von Trainingsbildern, mit denen das wenigstens eine zweite neuronalen Netz trainiert wird, umfasst Trainingsbilder, in denen abgebildete Merkmale der Bauteile durch das wenigstens eine erste neuronale Netz nicht korrekt erfasst wurden. Dieser wenigstens eine zweite Satz von Trainingsbildern umfasst beispielsweise Trainingsbilder, die zu einem Testen des wenigstens einen ersten neuronalen Netzes verwendet wurden und von dem wenigstens einen ersten neuronalen Netz nicht richtig analysiert wurden. Der wenigstens eine zweite Satz von Trainingsbildern kann auch nur Ausschnitte solcher Testbilder umfassen, auf die das fehlerhafte Analysieren zutrifft.

Das Trainieren des wenigstens einen zweiten neuronalen Netzes mit diesem wenigstens einen zweiten Satz von Trainingsbildern erzeugt ein zweites neuronales Netz, welches insbesondere darauf trainiert ist, Merkmale, die von dem wenigstens einen ersten neuronalen Netz nicht erfasst wurden, zu erkennen. Mit anderen Worten, das wenigstens eine zweite neuronale Netz wird mit dem wenigstens einen ersten neuronalen Netz in einem Ensemble zur Ergebniserstellung einbezogen, um verbesserte Ergebnisse zu erzielen. Das Erstellen des wenigstens einen zweiten Satzes von Trainingsbildern und das Trainieren des wenigstens einen zweiten neuronalen Netzes basierend auf diesem wird auch als "Hard-Negative-Mining" Verfahren bezeichnet. Alternativ kann auch ein sogenanntes "Hard-Positive-Mining" Verfahren verwendet werden.

Das Trainieren des wenigstens einen zweiten Netzes basierend auf wenigstens einem zweiten Satz von Trainingsbildern kann einmal durchgeführt werden, sodass wenigstens ein zweites neuronales Netz basierend auf einem zweiten Satz von Trainingsbildern trainiert wird. Der Vorgang kann aber auch mehrfach durchgeführt werden, sodass weitere zweite neuronale Netze basierend auf weiteren zweiten Sätzen von Trainingsbildern trainiert werden. Diese können wie oben beschrieben mit sogenannten "Hard-Negative" Trainingsbildern erstellt werden, oder mit sogenannten "Hard-Positive" Trainingsbildern. Die weiteren zweiten Sätze von Trainingsbildern können dann beispielsweise wiederum Trainingsbilder enthalten, die von zuvor trainierten zweiten neuronalen Netzen nicht korrekt erfasst wurden (Hard-Negative/Hard-Positive).

Sowohl das wenigstens eine erste neuronale Netz als auch das wenigstens eine zweite neuronale Netz weisen jeweils eine Global-Pooling Schicht auf. Diese erste der letzten convolutional Schicht folgende Schicht ist in beiden Fällen die Global-Pooling Schicht, und wandelt eine letzte zweidimensionale Schicht des jeweiligen neuronalen Netzes um und speichert die ermittelten Ergebnisse in einem Vektor. Diese Global-Pooling Schicht ersetzt beispielsweise ein abschließendes fully-connected-layer. Ein Vorteil hierbei ist es, dass die Global-Pooling Schichten als erste den letzten convolutional Schichten folgende Schichten besonders dafür geeignet sind, Ergebnisse einer Analyse eines Bauteils in einer sogenannten Heatmap anzuzeigen.

Das Zusammenfassen des wenigstens einen ersten neuronalen Netzes und des wenigstens einen zweiten neuronalen Netzes zu einer Mehrzahl von neuronalen Netzen bedeutet, dass ein Ensemble aus den ersten und den zweiten neuronalen Netzen erstellt wird, die bei einer späteren Analyse ein Bauteil analysieren können.

Das Verfahren gemäß dem zweiten Aspekt ist ein computerimplementiertes Verfahren.

In wenigstens einer Ausgestaltung wird das Trainieren des wenigstens einen ersten neuronalen Netzes und/oder das Trainieren des wenigstens einen zweiten neuronalen Netzes mittels überwachtem Lernen durchgeführt.

Ein Vorteil hierbei ist es, dass auf diese Weise Fehler in einem Erkennungsprozess von Merkmalen durch die neuronalen Netze reduziert werden. Hierzu werden vorhergesagte Ergebnissen der jeweiligen neuronalen Netze bezüglich erkannter Merkmalen anhand der jeweiligen gelabelten Trainingsbilder überprüft und gegebenenfalls korrigiert.

In wenigstens einer Ausgestaltung umfassen die durch das wenigstens eine erste neuronale Netz nicht korrekt erfassten Merkmale solche Merkmale, die mittels dem wenigstens einen ersten neuronalen Netz nicht erfasst wurden, obwohl sie vorhanden und markiert sind, oder solche, die erfasst wurden, obwohl eine entsprechende Stelle eines zugehörigen Trainingsbildes nicht markiert ist und ein in dem zugehörigen Trainingsbild abgebildetes Bauteil an dieser Stelle kein Merkmal aufweist. Alternativ oder zusätzlich umfassen die durch das wenigstens eine erste neuronale Netz nicht korrekt erfassten Merkmale solche Merkmale, die mittels dem wenigstens einen ersten neuronalen Netz erfasst wurden, obwohl eine entsprechende Stelle eines zugehörigen Trainingsbildes nicht markiert ist, aber ein in dem zugehörigen Trainingsbild abgebildetes Bauteil an dieser Stelle ein Merkmal aufweist. Insbesondere können als Trainingsbilder für das wenigstens eine zweite neuronale Netz auch nur Ausschnitte von größeren Bildern verwendet werden, auf die die zuvor genannten Fälle zutreffen. Für weitere zweite Sätze von Trainingsbildern können die oben genannten Fälle analog auf Merkmale, die durch zuvor Trainierte zweite neuronale Netze nicht korrekt erfasst wurden, angewendet werden.

Derartige Trainingsbilder für den wenigstens einen zweiten Satz von Trainingsbildern zu verwenden hat den Vorteil, dass wenigstens ein zweites neuronales Netz mit diesen Trainingsbildern trainiert werden kann, welches mit hoher Zuverlässigkeit Fehler in einem Ergebnis einer Analyse durch das wenigstens eine erste neuronale Netz oder zuvor Trainierte zweite neuronale Netze ausgleichen kann. Zusätzlich können auch Trainingsbilder oder Bildausschnitte für den wenigstens einen zweiten Satz Trainingsbilder verwendet werden, die mittels dem wenigstens einen ersten neuronalen Netz oder mittels wenigstens einem zuvor trainierten zweiten neuronalen Netzes korrekt erfasste Merkmale umfassen.

Gemäß dem zweiten Aspekt umfasst des Zusammenfassen des wenigstens einen ersten neuronalen Netzes und des wenigstens einen zweiten neuronalen Netzes zu einer Mehrzahl von neuronalen Netzen ferner:
- Zuweisen einer ersten Gewichtung, mit der ein Ergebnis einer Analyse des wenigstens einen ersten neuronalen Netzes gewertet wird, und
- Zuweisen wenigstens einer zweiten Gewichtung, mit der ein Ergebnis einer Analyse des wenigstens einen zweiten neuronalen Netzes gewertet wird.

Hierbei ist es vorteilhaft, dass durch eine passende Auswahl der Gewichtungen, mit denen die Ergebnisse der Analysen der jeweiligen neuronalen Netze gewichtet werden, ein bestmögliches Gesamtergebnis bei einer Analyse von Bauteilen erzielt werden kann. Bestmöglich bedeutet hierbei ein Ergebnis mit einer höchstmöglichen Zuverlässigkeit. Beispielsweise können bestmögliche Gewichtungen durch Testanalysen erprobt werden. Beispielsweise kann dem wenigstens einen ersten neuronalen Netz eine höhere Gewichtung als dem wenigstens einen zweiten neuronalen Netz zugeschrieben werden. In diesem Fall überstimmt ein Ergebnis einer Analyse mit dem wenigstens einen zweiten neuronalen Netz ein Ergebnis einer Analyse mit dem wenigstens einen ersten neuronalen Netz, wenn das erste neuronale Netz ein nur unsicheres Ergebnis liefert, das wenigstens eine zweite neuronale Netz aber mit hoher Wahrscheinlichkeit feststellt, dass in der Analyse des ersten neuronalen Netzes ein Fehler vorliegt.

Gemäß einem dritten Aspekt der Erfindung ist eine Vorrichtung zum Analysieren eines Bauteils dazu eingerichtet, das Verfahren gemäß dem ersten Aspekt durchzuführen.

Gemäß einem vierten Aspekt der Erfindung ist eine Vorrichtung zum Trainieren eines Systems zum Analysieren eines Bauteils dazu eingerichtet, das Verfahren gemäß dem zweiten Aspekt der Erfindung durchzuführen.

Gemäß einem fünften Aspekt der Erfindung umfasst ein Computerprogramm Befehle, die bei der Ausführung des Computerprogramms durch einen Computer diesen veranlassen, das Verfahren gemäß dem ersten Aspekt oder das Verfahren gemäß dem zweiten Aspekt auszuführen.

Gemäß einem sechsten Aspekt der Erfindung umfasst ein computerlesbares Speichermedium das Computerprogramm gemäß dem fünften Aspekt.

Vorteile und Ausgestaltungen des dritten, des vierten, des fünften und des sechsten Aspekts entsprechen im Wesentlichen denen des ersten bzw. des zweiten Aspekts. Merkmale, die bezüglich eines der Aspekte genannt sind, können in geeigneter Weise auch mit den Gegenständen der anderen Aspekte kombiniert werden.

Ausführungsbeispiele der Erfindung sind im Folgenden anhand der schematischen Zeichnungen näher erläutert.

In den Figuren zeigen:
- Figur 1: ein Flussdiagramm eines Verfahrens zum Trainieren eines Systems zum Analysieren eines Bauteils,
- Figur 2: ein Flussdiagramm eines Verfahrens zum Analysieren eines Bauteils, und
- Figur 3: eine schematische Darstellung einer Vorrichtung zum Trainieren eines Systems und zum Analysieren eines Bauteils.

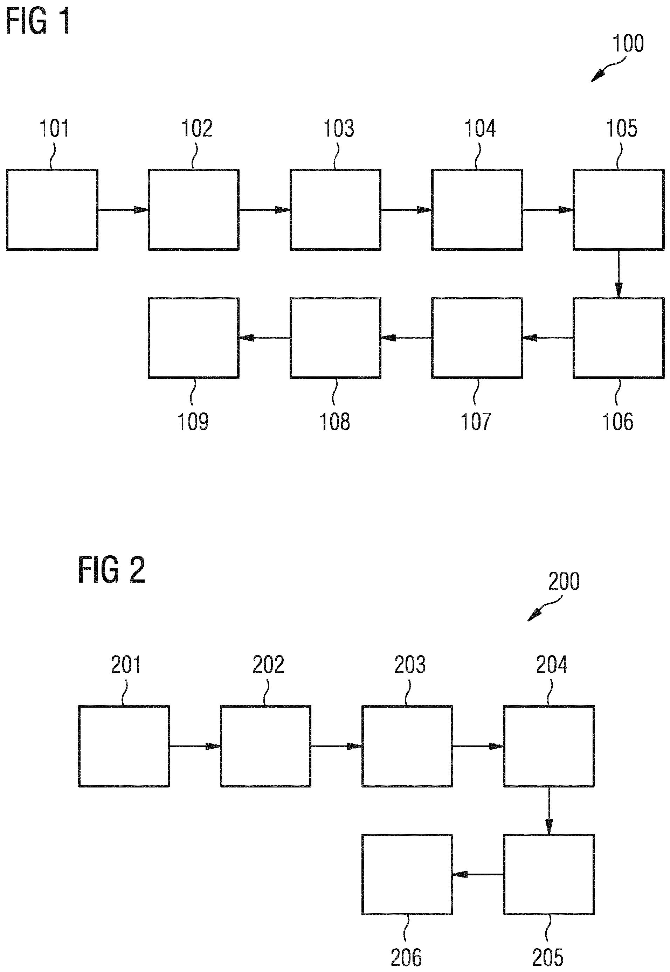

Figur 1 zeigt ein Flussdiagramm eines Verfahrens 100 zum Trainieren eines Systems zum Analysieren eines Bauteils. Das Verfahren 100 gemäß Figur 1 wird an einem Beispiel erklärt, in dem ein System zum Analysieren einer Oberfläche eines Bauteils trainiert wird. Dies ist jedoch lediglich beispielhaft zu verstehen. Analog kann das Verfahren auch dazu verwendet werden, ein System zum Analysieren eines anderen Teils eines Bauteils zu trainieren. Beispielsweise können Schnittstellen, Bruchstellen, Röntgenaufnahmen, Ultraschallaufnahmen oder ähnliches zum Analysieren eines inneren Bereichs des Bauteils verwendet werden.

In einem ersten Schritt 101 des Verfahrens 100 wird ein erster Satz von Trainingsbildern erstellt. Bei dem ersten Satz von Trainingsbildern handelt es sich um eine Mehrzahl von 2D-RGB Bildern, welche Oberflächen von Bauteilen zeigen. Die Bilder zeigen Oberflächen von Bauteilen, welche solchen Bauteilen ähnlich sind, die mit dem System zum Analysieren einer Oberfläche eines Bauteils letzten Endes analysiert werden sollen. Beispielsweise, wenn das System zum Analysieren von Druckgussbauteilen verwendet werden soll, zeigen die Bilder des ersten Satzes von Trainingsbildern Oberflächen von derartigen Druckgussbauteilen. Selbstverständlich können auch beliebige andere Arten von Bauteilen verwendet werden. Alternativ können statt der 2D-RGB Bilder auch andere Bilder verwendet werden, zum Beispiel schwarz-weiß Bilder, Grauwertbilder, sonstige Fotoaufnahmen, Röntgenbilder, Ultraschallbilder etc. Ein Bildtyp der Trainingsbilder stimmt für ein bestes Ergebnis der späteren Analyse mit einem Bildtyp solcher Aufnahmen überein, die später zur Merkmalserkennung verwendet werden.

In den Bildern des ersten Satzes von Trainingsbildern sind Merkmale, welche die Oberflächen der Bauteile aufweisen, markiert. Man spricht hier auch von gelabelten Bildern. Bei den Merkmalen handelt es sich beispielsweise um ungewollte Defekte wie ungewollte Löcher, Kratzer, Risse, Dellen, Beulen, Macken, Abdrücke oder Ähnliches, oder um sonstige Merkmale, die beispielsweise Gravuren, Falze oder vorgesehene Öffnungen, die mit dem System erkannt werden sollen. Das Markieren der Merkmale in den Bildern des ersten Satzes von Trainingsbildern wurde beispielsweise durch einen Experten vorgenommen. Die Markierungen der Merkmale sind mit auf die jeweiligen Bilder bezogenen XY-Koordinaten abgespeichert. Das Markieren der Merkmale in den Bildern kann alternativ auch erst zu einem späteren Zeitpunkt erfolgen, was weiter unten beschrieben ist. In diesem Fall sind die Bilder des ersten Satzes von Trainingsbildern zunächst nicht gelabelt.

In dem ersten Schritt 101 werden die Bilder des ersten Satzes von Trainingsbildern ferner in eine Mehrzahl von Bildsektionen unterteilt. Diese Bildsektionen werden auch "Patches" genannt. Beispielsweise werden die Bilder in eine Mehrzahl von Bildsektionen gleicher Größe unterteil. Die Größe der Bildsektionen ist in diesem Ausführungsbeispiel an eine Inputgröße von neuronalen Netzen, die mit diesem System trainiert werden sollen, angepasst. Die Bildsektionen können so eingerichtet sein, dass sie sich aneinander anschließen. Alternativ können die Bildsektionen auch einander überlappen.

In einem zweiten Schritt 102 werden die Bildsektionen der Bilder des ersten Satzes von Trainingsbildern klassifiziert. Hierfür wird jeder Sektion jedes Bildes eine vordefinierte Klasse zugewiesen. Die vorbestimmten Klassen unterscheiden Bildsektionen, die keine Merkmale aufweisen von solchen Bildsektionen, die ein Merkmal aufweisen. Dies erfolgt beispielsweise automatisiert, indem erkannt wird, ob die jeweilige Bildsektion zumindest teilweise in einem Bereich liegt, der mit einem Merkmal markiert ist.

Für den oben erwähnten Fall, dass Merkmale in den Bildern zunächst nicht markiert wurden, kann das Markieren der Merkmale gleichzeitig mit dem Klassifizieren in diesem Schritt 102 durchgeführt werden. In diesem Fall werden die im Schritt 101 erstellten Bildsektionen der ungelabelten Bilder direkt von einem Experten klassifiziert. So wird für jede Bildsektion entschieden, ob sie eine Bildsektion ist, die zumindest teilweise ein Merkmal oder ein Teil von einem Merkmal zeigt. Gleichzeitig werden hierbei die Bildsektionen, die zumindest teilweise zumindest einen Teil eines Merkmals zeigen, den vorbestimmten Klassen von Merkmalen zugewiesen.

Zum Klassifizieren gibt es eine Klasse "normal", die solchen Bildsektionen zugewiesen wird, die keine Merkmale aufweisen. Außerdem gibt es Klassen, die bestimmten Arten von Merkmalen zugeordnet sind. So gibt es Klassen "Merkmal 1" bis "Merkmal n", die Bildsektionen mit entsprechenden Merkmalen zugewiesen werden. Diese verschiedenen Merkmalsklassen beziehen sich auf verschiedene Arten von Merkmalen, die von den später trainierten neuronalen Netzen erkannt und entsprechend der Klassen unterschieden werden sollen. Sollen beispielsweise von den später trainierten neuronalen Netzen sowohl Kratzer an einer Oberfläche als auch ungewollte Löcher in der Oberfläche und beispielsweise Gravuren voneinander unterschieden werden, so gibt es eine Klasse 1, die Bildsektionen mit einem Kratzer zugewiesen werden, eine Klasse 2, die Bildsektionen mit einem ungewollten Loch zugewiesen werden, und eine Klasse 3, die einer Bildsektion, auf der eine Gravur erkennbar ist, zugewiesen werden.

Das Zuweisen der Klassen zu den jeweiligen Bildsektionen kann beispielsweise anhand eines Schwellenwerts vorgenommen werden. In diesem Fall wird eine jeweilige Bildsektion erst dann der entsprechenden Klasse zugewiesen, wenn ein Anteil der Bildsektion, die das entsprechende Merkmal aufweist, den Schwellwert übersteigt. Beispielsweise kann hierfür ein Schwellwert 10% bis 25% gewählt werden. Dieser Schwellwert kann insbesondere von einer gängigen Größe der jeweiligen Merkmale abhängen.

In einem dritten Schritt 103 wird ein grafischer Filter auf alle Bildsektionen der Bilder des ersten Satzes von Trainingsbildern angewendet. Beispielsweise handelt es sich hierbei um einen schwarz/weiß Filter, der die 2D-RGB Bilder in schwarz-weiß Bilder umwandelt. Insbesondere eignet sich hierzu ein so genannter Otsu-Filter, der die RGB Bilder in binäre schwarz-weiß Bilder umwandelt.

Nach dem Anwenden des Filters auf die Bildsektionen der Bilder des ersten Satzes von Trainingsbildern können auf einfache Weise automatisiert alle Bildsektionen aussortiert werden, die keinen Teil eines Bauteils zeigen. Beispielsweise sind dies Bildsektionen, die einen Hintergrund, vor dem das Bauteil fotografiert wurde, zeigen. Diese Sektionen sind nicht relevant für das Trainieren der neuronalen Netze. Das Aussortieren solcher Bildsektionen ermöglicht ein schnelleres und genaueres Trainieren der neuronalen Netze. Auch hierbei kann ein Schwellwert, ab wann eine Bildsektion aussortiert werden soll, gewählt werden. Beispielsweise können Bildsektionen nur dann berücksichtigt werden, wenn wenigstens 5% der Bildsektion einen Teil des Bauteils zeigen.

In einem vierten Schritt 104 wird ein Satz von ersten neuronalen Netzen vorbereitet. Die ersten neuronalen Netze können vortrainierte neuronale Netze sein oder solche, die neu trainiert werden. Insbesondere sind die ersten neuronalen Netze Convolutional Neural Networks (CNNs). Beispielsweise können hierfür vortrainierte Open-Source Netze verwendet werden. Beispielsweise kann hierfür das CNN "ResNet50" verwendet werden. Ferner ist es möglich, unterschiedliche erste neuronale Netze zu verwenden, deren Ergebnisse später gemittelt werden. Außerdem können bei der Auswahl der Netze Anforderungen an das Analysieren der Oberflächen von Bauteilen berücksichtigt werden. Beispielsweise können bestimmte neuronale Netze ausgewählt werden, je nachdem ob bei dem Analysieren der Oberflächen der Bauteile genauere Ergebnisse oder eine kürzere Analysezeit gewünscht ist.

In dem vierten Schritt 104 wird ferner sichergestellt, dass die ersten neuronalen Netze jeweils eine Global-Pooling Schicht, beispielsweise eine Global-Average-Pooling Schicht, eine Global-Maximum-Pooling Schicht oder eine Global-Minimum-Pooling Schicht, aufweisen. Die Global-Pooling Schicht ist in diesem Ausführungsbeispiel eine erste der letzten convolutional Schicht folgende Schicht. Egal was für ein neuronales Netz als erstes neuronales Netz ausgewählt wird, wenn die Ausgangsschicht keine Global-Pooling Schicht ist, wird eine vorhandene erste der letzten convolutional Schicht folgende Schicht des Netzes entfernt und eine Global-Pooling Schicht wird stattdessen eingesetzt. Die Global-Pooling Schicht ist hier als erste der letzten convolutional Schicht folgende Schicht für die ersten neuronalen Netze gewählt, da diese besonders für eine Visualisierung der Analyseergebnissen geeignet ist.

In dem vierten Schritt 104 wird außerdem die Global-Pooling Schicht mit in den ersten neuronalen Netzen vorhandenen Sigmoid- bzw. Softmax-Schichten verbunden. Zwischen der Global-Pooling Schicht und der Sigmoid- bzw. Softmax-Schicht können zusätzliche Schichten eingefügt werden, um ein Overfitting zu vermeiden oder zu mindern. Die Sigmoid-Schicht wird insbesondere dann verwendet, wenn höchstens zwei Merkmalsklassen vorhanden sind. Die Softmax-Schicht wird insbesondere dann verwendet, wenn mehr als zwei Merkmalsklassen vorhanden sind. Die Sigmoid- bzw. Softmax-Schicht ist eine letzte Schicht, die bestimmt, wenn ein Merkmal festgestellt wird, welcher Klasse dieses Merkmal angehört.

Zusätzlich zur Verwendung zusätzlicher Zwischenschichten kann zum Reduzieren oder Vermeiden von Overfitting auch ein Augmentieren der Bildsektionen und das Verwenden mehrerer erster neuronaler Netze dienen. Dies hat den Vorteil, dass selbst wenn nur geringe Datenmengen für das Trainieren der neuronalen Netze zur Verfügung stehen, ein genaues und zuverlässiges Trainieren der neuronalen Netze möglich ist.

In einem fünften Schritt 105 werden die ersten neuronalen Netze trainiert anhand des galabelten ersten Satzes von Trainingsbildern. Zum Trainieren der ersten neuronalen Netze wird ein sogenanntes "supervised-learning" verwendet. Hierbei werden die vorhergesagten Ergebnisse der ersten neuronalen Netze während dem Trainingsverfahren anhand der gelabelten Bilder des ersten Satzes von Trainingsbildern überprüft. Auf diese Weise ist es möglich, Fehler in den vorhergesagten Ergebnissen zu korrigieren und so ein besseres Trainingsergebnis der ersten neuronalen Netze zu erzielen.

Alternativ kann das Trainieren der ersten neuronalen Netze auch anhand "semi-supervised-learning" durchgeführt werden. Mit anhand des "semi-supervised-learnings" trainierten ersten neuronalen Netzen ist es auch möglich, Merkmale, die sich von den Merkmalen in den Trainingsbildern stärker unterscheiden, zu erkennen.

Während des Trainierens der ersten neuronalen Netze werden die Bildsektionen, anhand derer die ersten neuronalen Netze trainiert werden, augmentiert. Das Augmentieren der Bildsektionen umfasst beispielsweise ein Drehen, ein Spiegeln, ein Anwenden eines Rausch-Filters, ein Schärfen, etc. der Bildsektionen. Alternativ ist es auch möglich, das augmentieren der Bildsektionen vor dem Trainingsprozess abzuschließen und die augmentierten Bildsektionen für den Trainingsprozess abzuspeichern. Mit anderen Worten, das Augmentieren kann online oder offline durchgeführt werden.

Insbesondere ist es möglich, das Augmentieren anhand zufälliger Algorithmen vorzunehmen, sodass zufällige Veränderungen an den Bildsektionen vorgenommen werden. Auf diese Weise können robustere Modelle trainiert werden. Ein weiterer Vorteil des Augmentierens der Sektionen ist es beispielsweise, dass Einflüsse von unterschiedlichen Belichtungen und/oder Spiegelungen oder sonstiger visueller Beeinträchtigungen der Bilder des ersten Satzes von Trainingsbildern reduziert oder gar eliminiert werden können.

In einem sechsten Schritt 106 werden alle ersten neuronalen Netze anhand eines Testdatensatzes getestet. Die Bilder des Testdatensatzes sind in dem hier gezeigten Ausführungsbeispiel ebenfalls, analog zu den Trainingsbildern, in Bildsektionen aufgeteilt, klassifiziert, gelabelt und anhand grafischer Filter irrelevante Bildsektionen vor-aussortiert. Mit anderen Worten, die Bilder des Testdatensatzes sind analog zu den Schritten 101 bis 103 präpariert.

Anhand der Ergebnisse, die beim Analysieren der Bilder des Testdatensatzes erzielt werden, wird aus den ersten neuronalen Netzen ein Ensemble von neuronalen Netzen ausgewählt, die letzten Endes zum Analysieren von Oberflächen von Bauteilen verwendet werden sollen. Das Ensemble umfasst wenigstens eines der ersten neuronalen Netze. Hierbei werden insbesondere das wenigstens eine oder mehrere der ersten neuronalen Netze ausgewählt, die ein zuverlässigstes Ergebnis beim Analysieren der Testdaten erzielen.

In einem siebten Schritt 107 wird ein zweiter Satz von Trainingsbildern zusammengestellt. Der zweite Satz von Trainingsbildern besteht aus Bildsektionen der Bilder des Testdatensatzes, in denen Merkmale beim Testen im Schritt 106 nicht korrekt erfasst wurden. Dies betrifft im hier gezeigten Ausführungsbeispiel sowohl solche Fälle, in denen von den ersten neuronalen Netzen vermeintliche Merkmale erkannt wurden, die jedoch nicht existieren, bzw. in denen von den ersten neuronalen Netzen gelabelte Merkmale nicht erkannt wurden, als auch solche, bei denen die ersten neuronalen Netze beim Testen Merkmale erkannt haben, die tatsächlich in den Bildsektionen der Testbilder existieren, aber fälschlicherweise nichts mit einem Merkmalslabel versehen sind. Letzteres ist beispielsweise dann der Fall, wenn ein Experte, der das Labeln der Testbilder vorgenommen hat, ein Merkmal nicht erkannt oder vergessen hat zu markieren. Zum Erstellen des zweiten Satzes von Trainingsbildern wird im vorliegenden Ausführungsbeispiel das oben beschriebene Hard-Negative-Mining Verfahren verwendet. Alternativ könnten auch die vollständigen entsprechenden Bilder verwendet werden.

Die Bilder des zweiten Satzes von Trainingsbildern werden dann zusammen mit einer entsprechenden Information bezüglich der Bildsektionen abgespeichert, ob es sich um ein fehlerhaftes Erkennen ("hard negativ") oder ein fehlerhaftes Labeln ("nicht gelabelt") handelt. Zusätzlich können zu dem zweiten Satz von Trainingsbildern ebenfalls die Bildsektionen hinzugefügt werden, die als mit einem Merkmal behaftet korrekt gelabelt wurden und dies korrekt von den ersten neuronalen Netzen erkannt wurde.

In einem Achten Schritt 108 des Verfahrens 100 werden zweite neuronale Netze basierend auf dem zweiten Satz von Trainingsbildern trainiert. Die zweiten neuronalen Netze können wie die ersten neuronalen Netze vortrainierte oder untrainierte neuronale Netze sein. Die zweiten neuronalen Netze sind ferner ebenfalls insbesondere convolutional neural networks (CNNs). In dem hier gezeigten Ausführungsbeispiel werden die zweiten neuronalen Netze analog zu den ersten neuronalen Netzen vorbereitet und trainiert, mit dem Unterschied, dass das Trainieren der zweiten neuronalen Netze auf dem zweiten Satz von Trainingsbildern, der im Schritt 107 erstellt wurde, basiert. Mit anderen Worten, die Schritte 104 bis 106 werden für die zweiten neuronalen Netze durchgeführt.

Da die zweiten neuronalen Netze auf den in Schritt 107 erstellten Trainingsbildern trainiert werden, werden die zweiten neuronalen Netze insbesondere darauf trainiert, Merkmale einer Oberfläche von Bauteilen zu erkennen, die von den ersten neuronalen Netzen nicht korrekt erfasst wurden. Somit können die zweiten neuronalen Netze dazu genutzt werden, ein Ergebnis einer Analyse, die mit den ersten neuronalen Netzen durchgeführt wurde, zu überprüfen und gegebenenfalls zu korrigieren. Wenigstens ein zweites neuronales Netz der zweiten neuronalen Netze, insbesondere welches die zuverlässigsten Ergebnisse liefert, wird dann ausgewählt.

Optional können weitere zweite Sätze von Trainingsbildern erstellt werden, und weitere zweite neuronale Netze basierend auf diesen weiteren zweiten Sätzen von Trainingsbildern trainiert werden. Dies kann analog zu den oben beschriebenen zweiten neuronalen Netzen geschehen. Die weiteren zweiten Sätze von Trainingsbildern können beispielsweise wiederum Trainingsbilder enthalten, die von zuvor trainierten zweiten neuronalen Netzen nicht korrekt erfasst wurden. Hier kann entsprechend das oben genannte Hard-Negative-Mining Verfahren bezüglich der zuvor trainierten zweiten neuronalen Netze angewendet werden. Ferner kann hier auch ein Hard-Positive-Mining Verfahren angewendet werden.

In einem neunten Schritt 109 wird ein Ensemble aus ersten neuronalen Netzen und zweiten neuronalen Netzen zusammengestellt. Hierfür werden die im Schritt 106 ausgewählten ersten neuronalen Netze, die die besten Ergebnisse bei der Merkmalserkennung geliefert haben und die zweiten neuronalen Netze, die ihrerseits die besten Ergebnisse der Merkmalserkennung geliefert haben, ausgewählt. Das Ensemble kann aus jeweils einem ersten und einem zweiten neuronalen Netz oder mehreren ersten und/oder mehreren zweiten neuronalen Netzen oder einem ersten und mehreren zweiten neuronalen Netzen oder mehreren ersten und einen zweiten neuronalen Netz bestehen. Das Auswählen mehrerer erster bzw. zweiter neuronaler Netze für das Ensemble kann robustere Ergebnisse bei der Merkmalserkennung liefern. Ein reduzieren der Anzahl der ersten bzw. zweiten neuronalen Netze für das Ensemble kann eine Bearbeitungszeit und/oder einen Rechenaufwand der Merkmalserkennung reduzieren. Optional kann das Ensemble entsprechend auch zusätzlich neuronale Netze der weiteren zweiten neuronalen Netze umfassen.

Im Schritt 109 des Verfahrens 100 werden ferner den ersten und den zweiten neuronalen Netzen Faktoren zugeteilt, mit denen bei einer Analyse einer Oberfläche eines Bauteils die Ergebnisse dieser Analyse jeweils gewichtet werden. Ob ein Merkmal bei einer Merkmalsanalyse als solches erkannt wird oder nicht, wird letzten Endes durch ein Gewichten der Ergebnisse der einzelnen ersten und zweiten neuronalen Netze ausgewertet. Sind weitere zweite neuronale Netze vorhanden, so können diese entsprechend eine Gewichtung erhalten.

Für dieses Auswerten werden die einzelnen Ergebnisse der Merkmalserkennung der ersten bzw. zweiten neuronalen Netze anhand der Faktoren gewichtet. Auch die Ergebnisse der einzelnen ersten neuronalen Netze können untereinander unterschiedlich gewichtet werden. Ebenso können auch die Ergebnisse der einzelnen zweiten neuronalen Netze untereinander unterschiedlich gewichtet werden.

Beispielsweise werden die Ergebnisse der ersten neuronalen Netze mit einem Faktor 0,6 gewichtet und die Ergebnisse der zweiten neuronalen Netze mit einem Faktor 0,4 gewichtet. Ergibt eine gemittelte Auswertung einer Merkmalsanalyse mit den ersten neuronalen Netzen beispielsweise, dass mit einer Wahrscheinlichkeit von 60% an einer bestimmten Stelle ein Merkmal erkannt wurde, so wird dieses Ergebnis mit dem Faktor 0,6 gewichtet. Ergibt eine Auswertung einer Merkmalsanalyse mit den zweiten neuronalen Netzen, dass an eben dieser Stelle jedoch mit einer Wahrscheinlichkeit von 95% kein Merkmal vorliegt, so wird dieses Ergebnis von 95% mit dem Faktor 0,4 gewichtet. In diesem Fall übersteigt letzten Endes die Auswertung der zweiten neuronalen Netze ein Ergebnis der Auswertung der ersten neuronalen Netze, sodass das Ensemble der ersten und zweiten neuronalen Netze bei einer Vorhersage zu dem Ergebnis kommt, dass mit höherer Wahrscheinlichkeit kein Merkmal an besagter Stelle vorliegt. Sind weitere zweite neuronale Netze trainiert, so können diese analog gewichtet werden.

Vorteilhaft bei der hier beschriebenen höheren Gewichtung der ersten neuronalen Netze liegt darin, dass die ersten neuronalen Netze auf einer umfangreicheren Datenbasis trainiert wurden. Die ersten neuronalen Netze liefern somit in vielen Bereichen verhältnismäßig zuverlässige Ergebnisse. An Stellen, an denen die ersten neuronalen Netze jedoch keine zuverlässigen Ergebnisse liefern können, d.h. bei denen eine Wahrscheinlichkeit einer Korrektheit des Ergebnisses verhältnismäßig gering ist, diese Stellen können anhand von Ergebnissen, die die zweiten neuronalen Netze liefern, korrigiert werden, wenn eine Wahrscheinlichkeit einer Korrektheit des Ergebnisses der zweiten neuronalen Netze die Wahrscheinlichkeit der Korrektheit des Ergebnisses der ersten neuronalen Netze derart übersteigt, dass trotz der schwächeren Gewichtung das Ergebnis der zweiten neuronalen Netze überwiegt.

Die oben beschriebene Gewichtung kann im hier gezeigten Ausführungsbeispiel automatisiert bestimmt werden, indem anhand von Testdaten unterschiedliche Gewichtungen ausprobiert werden und das Verhältnis der Gewichtungen der ersten und zweiten neuronalen Netze bestimmt wird, welches die besten Endergebnisse beim Testen mit den Testdaten liefert.

Figur 2 zeigt ein Flussdiagramm eines Verfahrens 200 zum Analysieren eines Bauteils. Das Verfahren 200 gemäß Figur 2 wird an einem Beispiel erklärt, in dem eine Oberfläche eines Bauteils analysiert wird. Dies ist jedoch lediglich beispielhaft zu verstehen. Analog kann das Verfahren 200 auch dazu verwendet werden, ein anderes Teil eines Bauteils zu analysieren. Beispielsweise können auch Schnittstellen, Bruchstellen, Röntgenaufnahmen, Ultraschallaufnahmen oder ähnliche Bereiche des Bauteils analysiert werden.

In einem ersten Schritt 201 wird ein Bild einer Oberfläche eines Bauteils, die untersucht werden soll, aufgenommen. Das Bild ist beispielsweise eine Fotografie, die beispielsweise mit einem Fotoapparat, einem Mobiltelefon, einem Tablet-PC oder sonstigen Aufnahmegerät aufgenommen wurde. Das Bild ist beispielsweise ein 2D-RGB Bild. Alternativ kann statt des 2D-RGB Bilds auch ein anderer Bildtyp verwendet werden, zum Beispiel schwarz-weiß Bilder, Grauwertbilder, sonstige Fotoaufnahmen, Röntgenbilder, Ultraschallbilder etc. Ein Bildtyp des aufgenommenen Bilds stimmt für ein bestes Ergebnis der Analyse mit einem Bildtyp solcher Aufnahmen überein, die zum Trainieren verwendet wurden.

Alternativ, wenn das Bild bereits zu einem früheren Zeitpunkt aufgenommen wurde, kann das Bild im Schritt 201 auch lediglich empfangen werden, beispielsweise aus einer Datenbank.

In einem zweiten Schritt 202 wird das im Schritt 201 aufgenommene Bild in Bildsektionen unterteilt. Die Bildsektionen können so eingeteilt sein, dass sie aneinander angrenzen oder sich zumindest teilweise überlappen. Die Größe der Bildsektionen ist insbesondere an eine Inputgröße für neuronale Netze, die zur Analyse der Oberfläche verwendet werden, angepasst. Ein Überlappen der Bildsektionen kann beispielsweise für eine Visualisierung der Analyseergebnisse vorteilhaft sein.

In einem dritten Schritt 203 wird mit einem Ensemble aus wenigstens einem ersten neuronalen Netz und wenigstens einem zweiten neuronalen Netz einen Merkmalserkennung für jede Bildsektion des aufgenommenen Bildes durchgeführt. Hierbei können die Bildsektionen vor oder während dem Durchführen der Merkmalserkennung argumentiert werden. Das Augmentieren entspricht im Wesentlichen dem mit Bezug zu Figur 1 beschriebenen Augmentieren und wird hier nicht erneut beschrieben. Das Ensemble aus wenigstens einem ersten und wenigstens einem zweiten neuronalen Netz ist beispielsweise das gemäß Figur 1 erzeugte Ensemble aus ersten und zweiten neuronalen Netzen.

Die Ergebnisse, die die Merkmalserkennung der ersten neuronalen Netze und der zweiten neuronalen Netze ergibt wird jeweils untereinander gemittelt und anschließend die gemittelten Ergebnisse der ersten neuronalen Netzen und die gemittelten Ergebnisse der zweiten neuronalen Netze gegeneinander gewichtet, um ein Endergebnis der Merkmalserkennung zu erzeugen. Diese Gewichtung entspricht der mit Bezug zu Figur 1 beschriebenen Gewichtung und wird hier nicht erneut beschrieben. Zusätzlich zu der Information, ob ein Merkmal vorliegt oder nicht, wird mit dem Ensemble aus ersten und zweiten neuronalen Netzen ferner bestimmt, um welche Art von Merkmal es sich handelt. Mit anderen Worten, die Merkmale werden ebenfalls klassifiziert, wenn verschiedene Merkmalsklassen den neuronalen Netzen antrainiert wurden.

In einem vierten Schritt 204 werden Regionen, die bei der Merkmalserkennung in Schritt 203 als relevant ausgewertet wurden, auf den Bildsektionen lokalisiert. Für die Lokalisierung dieser Regionen wird das sogenannte Class-Activation-Mapping Verfahren verwendet. Hierbei werden die gewichteten Ergebnisse der Ausgabeschichten der ersten bzw. zweiten neuronalen Netze auf Faltungsmerkmalskarten (convolutional feature maps) der jeweiligen ersten bzw. zweiten neuronalen Netze zurückprojiziert. Mit anderen Worten, es werden Stellen als markant visualisiert, an denen das Ensemble aus ersten bzw. zweiten neuronalen Netzen ein Merkmal erkannt hat. Bei dieser Visualisierung des Ergebnisses der Merkmalserkennung der ersten und zweiten neuronalen Netze werden die Pixel der Bildsektionen farblich gewichtet. Die Farbe der Pixel entspricht hierbei einer Wahrscheinlichkeit, mit der das Ensemble aus ersten bzw. zweiten neuronalen Netzen ein Merkmal erkannt hat. Um die Merkmale auf Bildsektionen besser zu visualisieren, werden Class-Activation-Maps für augmentierte Bildsektionen separat gebildet und anschließend darüber gemittelt. Dies wird auch als Gradientenfüllung bezeichnet.

In einem fünften Schritt 205 wird eine Heatmap erstellt, die auf das im Schritt 201 aufgenommene Bild gelegt wird. Die Heatmap wird gemittelt aus den augmentierten Class-Activation-Maps aus Schritt 204 erstellt. Jeder Pixel repräsentiert in der Heatmap eine Wahrscheinlichkeit dafür, dass an besagter Stelle ein Merkmal existiert. Die Heatmap wird halbdurchsichtig über dem aufgenommenen Bild dargestellt, sodass durch die farblichen Abstufungen der Wahrscheinlichkeiten der Ergebnisse der Merkmalsanalyse unmittelbar in dem Originalbild angezeigt werden kann, an welchen Stellen Merkmale erkannt wurden.

In einem sechsten Schritt 206 wird das Originalbild, nachdem ein Experte die Korrektheit und Vollständigkeit der erkannten Merkmale überprüft hat, anhand der Heatmap gelabelt. Mit anderen Worten, es wird bezogen auf das Originalbild anhand von Koordinaten bestimmt, an welchen Stellen sich welche Art von Merkmalen befinden. Dieses gelabelte Originalbild entspricht den mit Bezug zu Figur 1 beschriebenen, in Schritt 101 verwendeten gelabelten Trainingsdaten. Das Originalbild, welches gelabelt wurde, wird anschließend abgespeichert und einem Satz von Trainingsbildern hinzugefügt. Auf diese Weise werden umfangreichere Trainingsdaten generiert, anhand derer erste und zweite neuronale Netze noch besser trainiert werden können, beispielsweise mit den Verfahren 100 wie mit Bezug zu Figur 1 beschrieben.

Die gemäß Figuren 1 und 2 beschriebenen Verfahren 100 und 200 sind computerimplementierte Verfahren.

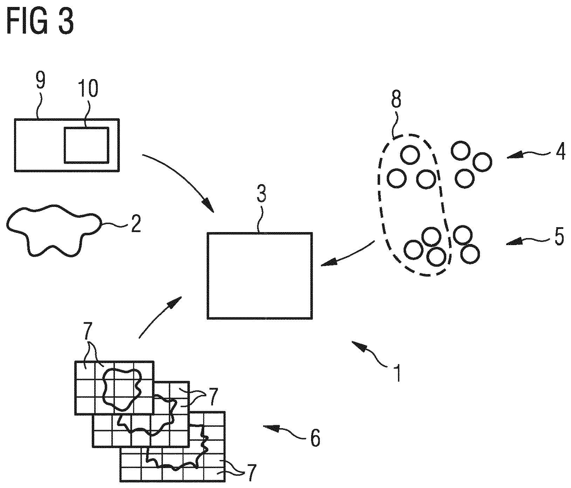

Figur 3 zeigt eine schematische Darstellung einer Vorrichtung 1 zum Trainieren eines Systems zum Analysieren eines Bauteils 2. Die Vorrichtung 1 ist ferner dazu eingerichtet, ein Bauteil 2 zu analysieren. Die Vorrichtung 1 gemäß Figur 3 wird am Beispiel einer zu analysierenden Oberfläche eines Bauteils erklärt. Dies ist jedoch lediglich beispielhaft zu verstehen. Analog kann die Vorrichtung 1 auch dazu verwendet werden, ein anderes Teil eines Bauteils zu analysieren. Beispielsweise können auch Schnittstellen, Bruchstellen, Röntgenaufnahmen, Ultraschallaufnahmen oder ähnliche Bereiche des Bauteils analysiert werden.

Die Vorrichtung 1 ist insbesondere dazu eingerichtet, das Verfahren 100 und das Verfahren 200, die mit Bezug zu Figuren 1 und 2 beschrieben wurden, auszuführen. Die Vorrichtung 1 umfasst ein Computersystem 3, welches dazu eingerichtet ist, erste neuronale Netze 4 und zweite neuronale Netzen 5 zu trainieren.

Zum Trainieren der ersten neuronalen Netze 4 und der zweiten neuronalen Netze 5 greift das Computersystem 3 auf Trainingsbilder 6 zu. Die Trainingsbilder 6 umfassen einen ersten Satz von Trainingsbildern, anhand deren die ersten neuronalen Netze 4 trainiert werden, sowie wenigstens einen Testdatensatz, anhand dessen die trainierten ersten neuronalen Netze 4 getestet werden und aus denen ein zweiter Satz von Trainingsbilder erstellt wird. Anhand des zweiten Satzes von Trainingsbildern werden die zweiten neuronalen Netze 5 trainiert. Weitere zweite neuronale Netze 5 können dann anhand weiterer zweiter Sätze von Trainingsbildern trainiert werden, die beispielsweise dadurch erstellt wurden, dass weitere Testdatensätze zum Testen der zuvor trainierten zweiten neuronalen Netze 5 verwendet wurden.

Die Trainingsbilder 6 sind 2D-RGB Bilder, die Oberflächen von Bauteilen zeigen. Die Trainingsbilder 6 können aber wie oben beschrieben auch Bilder eines anderen Typs sein. Die Trainingsbilder 6 sind jeweils in Bildsektionen 7 unterteilt. Informationen zu bestimmten Bildsektionen 7, in denen Merkmale an der Oberfläche der abgebildeten Bauteile erkennbar sind, sind zusätzlich zu den Trainingsbildern 6 abgespeichert.

Das Computersystem 3 ist dazu eingerichtet, die ersten neuronalen Netze 4 sowie die zweiten neuronalen Netze 5 zu trainieren und zu testen, sowie ein Ensemble 8 aus ersten und zweiten neuronalen Netzen 4, 5 auszuwählen und die ersten und zweiten neuronalen Netze 4, 5 des Ensembles 8 zu gewichten. Details hierin werden an dieser Stelle nicht wiederholt, es wird auf die Ausführungen bezüglich der Figuren 1 und 2 verwiesen.

Die Vorrichtung 1 umfasst des Weiteren ein Aufnahme- und Anzeigegerät 9, bei dem es sich im hier gezeigten Ausführungsbeispiel um ein Mobilgerät wie beispielsweise ein Smartphone oder ein Tablet-PC handelt. Mit dem Aufnahme- und Anzeigegerät 9 kann ein 2D-RGB Bild des Bauteils 2, dessen Oberfläche analysiert werden soll, aufgenommen werden. Für andere Bildtypen werden entsprechend andere Aufnahme- und Anzeigegeräte verwendet, wie beispielsweise Röntgengeräte, Ultraschallgeräte, etc. Geräte zur Aufnahme und zum Anzeigen von aufgenommenen Bildern können selbstverständlich auch in getrennten Geräten implementiert sein.

Das Aufnahme- und Anzeigegerät 9 ist dazu eingerichtet, das aufgenommene Bild an das Computersystem 3 zu senden. Das Computersystem 3 ist dazu eingerichtet, eine Merkmalsanalyse an dem aufgenommenen Bild anhand des Ensembles 8 aus ersten neuronalen Netzen 4 und zweiten neuronalen Netzen 5 durchzuführen.

Das Computersystem 3 ist dazu eingerichtet, ein Ergebnis der Merkmalserkennung an das Aufnahme- und Anzeigegerät 9 zu senden. Das Aufnahme- und Anzeigegerät 9 weist ein Display 10 auf, auf dem das vom Computersystem 3 empfangene Ergebnis der Merkmalserkennung mit Bezug zu dem aufgenommenen Bild des Bauteils 2 dargestellt werden kann.

Das Aufnahme- und Anzeigegerät 9 kann auch dazu verwendet werden, die Trainingsbilder 6 aufzunehmen. Alternativ können die Trainingsbilder 6 auch von einem anderen Gerät aufgenommen worden sein.

In dem hier gezeigten Ausführungsbeispiel sind Computersystem 3 und das Aufnahmeund Anzeigegerät 9 getrennte Geräte. Alternativ können diese auch in einem Gerät integriert sein. Des Weiteren können zumindest Teile der Vorrichtung 1 auch als Cloud-Lösung implementiert sein.

### Bezugszeichenliste

- 1: Vorrichtung
- 2: Bauteil
- 3: Computersystem
- 4: erstes neuronales Netz
- 5: zweites neuronales Netz
- 6: Trainingsbild
- 7: Bildsektion
- 8: Ensemble
- 9: Aufnahme- und Anzeigegerät
- 10: Display

- 100: Verfahren
- 200: Verfahren
- 101 - 109: Schritte
- 201 - 206: Schritte

## Patentansprüche

1. Verfahren (200) zum Analysieren eines Bauteils mittels einem gemäß dem Verfahren (100) nach einem der Ansprüche 8 bis 10 trainierten System, das Verfahren (200) umfassend die Schritte:
- Empfangen eines Bildes des Bauteils;
- Durchführen (203) einer Merkmalserkennung an dem empfangenen Bild mittels einer Mehrzahl von neuronalen Netzen, wobei erkannte Merkmale Defekte an einer Oberfläche oder im Inneren des Bauteils oder Oberflächenstrukturen an dem Bauteil umfassen, wenigstens ein erstes neuronales Netz der Mehrzahl von neuronalen Netzen basierend auf einem ersten Satz von Trainingsbildern gemäß einem der Ansprüche 8 bis 10 trainiert ist, wenigstens ein zweites neuronales Netz der Mehrzahl von neuronalen Netzen basierend auf wenigstens einem zweiten Satz von Trainingsbildern gemäß einem der Ansprüche 8 bis 10 trainiert ist und das wenigstens eine erste neuronale Netz und das wenigstens eine zweite neuronale Netz jeweils eine Global-Pooling Schicht aufweist; und
- Anzeigen (205) eines Ergebnisses der Merkmalserkennung mit Bezug zu einer Darstellung des Bauteils, wobei erkannte Merkmale bezüglich der Oberfläche oder bezüglich dem Inneren des Bauteils lokalisiert angezeigt werden.

2. Verfahren (200) gemäß Anspruch 1, wobei die Darstellung des Bauteils, bezüglich der das Ergebnis der Merkmalserkennung angezeigt wird, das empfangene Bild des Bauteils ist.

3. Verfahren (200) gemäß einem der Ansprüche 1 oder 2, wobei zum Anzeigen des Ergebnisses der Merkmalserkennung ein Verfahren zum Darstellen von mittels neuronaler Netze berechneten Wahrscheinlichkeiten verwendet wird, insbesondere ein Class-Activation-Mapping Verfahren.

4. Verfahren (200) gemäß einem der Ansprüche 1 bis 3, wobei wenigstens ein Teil des empfangenen Bildes vor oder während dem Schritt des Durchführens (203) der Merkmalserkennung augmentiert wird, wobei bei dem Augmentieren der wenigstens eine Teil des empfangenen Bildes in einer anderen Form abgebildet wird und das Augmentieren ein Drehen, ein Spiegeln, oder ein Anwenden eines Filters auf den wenigstens einen Teil des empfangenen Bildes umfasst.

5. Verfahren (200) gemäß einem der Ansprüche 1 bis 4, wobei das empfangene Bild des Bauteils ferner dazu verwendet wird, wenigstens eines der Mehrzahl von neuronalen Netzen weiter zu trainieren.

6. Verfahren (200) gemäß einem der Ansprüche 1 bis 5, wobei das empfangene Bild, falls eine Größe des empfangenen Bildes nicht einer Inputgröße des wenigstens einen ersten und/oder des wenigstens einen zweiten neuronalen Netzes entspricht, vor dem Schritt des Durchführens (203) der Merkmalserkennung, in eine Mehrzahl von Bildsektionen unterteilt wird.

7. Verfahren (200) gemäß einem der Ansprüche 1 bis 6, wobei im Schritt des Durchführens (203) der Merkmalserkennung eine erste Merkmalserkennung mit dem wenigstens einen ersten neuronalen Netz und eine zweite Merkmalserkennung mit dem wenigstens einen zweiten neuronalen Netz durchgeführt wird und Ergebnisse der ersten Merkmalserkennung und der zweiten Merkmalserkennung prozentual gewichtet werden, um das Ergebnis der Merkmalserkennung zu berechnen.

8. Verfahren (100) zum Trainieren eines Systems zum Analysieren eines Bauteils, das Verfahren umfassend die Schritte:
- Erstellen eines ersten Satzes von Trainingsbildern, wobei der erste Satz von Trainingsbildern Trainingsbilder umfasst, welche wenigstens einen Teil von wenigstens einem Bauteil zeigen und erkennbare Merkmale an dem wenigstens einen Bauteil in den Trainingsbildern des ersten Satzes mittels labelling markiert sind, wobei Merkmale Defekte an einer Oberfläche oder im Inneren des Bauteils oder Oberflächenstrukturen an dem Bauteil umfassen;
- Trainieren (105) wenigstens eines ersten neuronalen Netzes basierend auf dem ersten Satz von Trainingsbildern, wobei das wenigstens eine erste neuronale Netz eine Global-Pooling Schicht aufweist;
- Erstellen wenigstens eines zweiten Satzes von Trainingsbildern, wobei der wenigstens eine zweite Satz von Trainingsbildern Trainingsbilder umfasst, in denen Merkmale an wenigstens einem Bauteil von dem wenigstens einen ersten neuronalen Netz nicht korrekt erfasst wurden;
- Trainieren (108) wenigstens eines zweiten neuronalen Netzes basierend auf dem wenigstens einen zweiten Satz von Trainingsbildern, wobei das wenigstens eine zweite neuronale Netz eine Global-Pooling Schicht aufweist und erkennbare Merkmale auf den Trainingsbildern des zweiten Satzes von Trainingsbildern markiert sind oder Bildsektionen der Trainingsbilder, die ein erkennbares Merkmal aufweisen, entsprechenden Merkmalsklassen zugeordnet sind;
- Zusammenfassen des wenigstens einen ersten neuronalen Netzes und des wenigstens einen zweiten neuronalen Netzes zu einer Mehrzahl von neuronalen Netzen, wobei der Schritt des Zusammenfassens des wenigstens einen ersten neuronalen Netzes und des wenigstens einen zweiten neuronalen Netzes zu einer Mehrzahl von neuronalen Netzen ferner umfasst: Zuweisen einer ersten Gewichtung, mit der ein Ergebnis einer Analyse mit dem wenigstens einen ersten neuronalen Netz gewertet wird; und Zuweisen wenigstens einer zweiten Gewichtung, mit der ein Ergebnis einer Analyse mit dem wenigstens einen zweiten neuronalen Netz gewertet wird.

9. Verfahren (100) gemäß Anspruch 8, wobei das Trainieren (105) des wenigstens einen ersten neuronalen Netzes und/oder das Trainieren (108) des wenigstens einen zweiten neuronalen Netzes mittels überwachtem Lernen durchgeführt wird.

10. Verfahren (100) gemäß einem der Ansprüche 8 oder 9, wobei
- die durch das wenigstens eine erste neuronale Netz nicht korrekt erfassten Merkmale solche Merkmale umfassen, die mittels dem wenigstens einen ersten neuronalen Netz erfasst wurden, obwohl eine entsprechende Stelle eines zugehörigen Trainingsbildes nicht markiert ist und ein in dem zugehörigen Trainingsbild abgebildetes Bauteil an dieser Stelle kein Merkmal aufweist, und/oder
- die durch das wenigstens eine erste neuronale Netz nicht korrekt erfassten Merkmale solche Merkmale umfassen, die mittels dem wenigstens einen ersten neuronalen Netz nicht erfasst wurden, obwohl eine entsprechende Stelle eines zugehörigen Trainingsbildes markiert ist und ein in dem zugehörigen Trainingsbild abgebildetes Bauteil an dieser Stelle ein Merkmal aufweist, und/oder
- die durch das wenigstens eine erste neuronale Netz nicht korrekt erfassten Merkmale solche Merkmale umfassen, die mittels dem wenigstens einen ersten neuronalen Netz erfasst wurden, obwohl eine entsprechende Stelle eines zugehörigen Trainingsbildes nicht markiert ist aber ein in dem zugehörigen Trainingsbild abgebildetes Bauteil an dieser Stelle ein Merkmal aufweist.

11. Vorrichtung (1) zum Analysieren einer Oberfläche eines Bauteils (2), wobei die Vorrichtung (1) dazu eingerichtet ist, das Verfahren (200) gemäß einem der Ansprüche 1 bis 7 durchzuführen.

12. Vorrichtung (1) zum Trainieren eines Systems zum Analysieren einer Oberfläche eines Bauteils (2), wobei die Vorrichtung (1) dazu eingerichtet ist, das Verfahren (100) gemäß einem der Ansprüche 8 bis 10 durchzuführen.

13. Computerprogramm umfassend Befehle, die bei der Ausführung des Computerprogramms durch einen Computer diesen veranlassen, das Verfahren (100, 200) nach einem der Ansprüche 1 bis 7 oder 8 bis 10 auszuführen.

14. Computerlesbares Speichermedium umfassend das Computerprogramm gemäß Anspruch 13.

## Claims

1. A method (200) for analyzing a component with a system trained according to the method (100) of any one of claims 8 to 10, the method (200) comprising the steps of:
- receiving an image of the component;
- performing (203) feature recognition on the received image using a plurality of neural networks, wherein recognized features comprise defects on a surface of or inside the component or surface structures on the component, at least one first neural network of the plurality of neural networks is trained, according to any one of claims 8 to 10, based on a first set of training images, at least one second neural network of the plurality of neural networks is trained, according to any one of claims 8 to 10, based on at least one second set of training images, and the at least one first neural network and the at least one second neural network each comprises a global pooling layer; and
- displaying (205) a result of the feature recognition with reference to a representation of the component, wherein recognized features are displayed localized with respect to the surface or with respect to the interior of the component.

2. The method (200) according to claim 1, wherein the representation of the component with respect to which the result of the feature recognition is displayed is the received image of the component.

3. The method (200) according to any one of claims 1 or 2, wherein a method for representing probabilities calculated using neural networks, in particular a class activation mapping method, is used for displaying the result of the feature recognition.

4. The method (200) according to any one of claims 1 to 3, wherein at least a part of the received image is augmented before or during the step of performing (203) the feature recognition, wherein in the augmenting, the at least a part of the received image is imaged in a different form and the augmenting comprises rotating, mirroring, or applying a filter to the at least a portion of the received image.

5. The method (200) according to any one of claims 1 to 4, wherein the received image of the component is further used to further train at least one of the plurality of neural networks.

6. The method (200) according to any one of claims 1 to 5, wherein, if a size of the received image does not correspond to an input size of the at least one first neural network and/or the at least one second neural network, the received image is divided into a plurality of image sections prior to the step of performing (203) the feature recognition.

7. The method (200) according to any one of claims 1 to 6, wherein in the step of performing (203) the feature recognition, a first feature recognition is performed with the at least one first neural network and a second feature recognition is performed with the at least one second neural network, and results of the first feature recognition and the second feature recognition are weighted as a percentage to calculate the result of the feature recognition.

8. A method (100) for training a system for analyzing a component, the method comprising the steps of:
- creating a first set of training images, wherein the first set of training images comprises training images showing at least a part of at least one component and recognizable features on the at least one component are labeled in the training images of the first set, wherein features comprise defects on a surface of or inside the component or surface structures on the component;
- training (105) at least one first neural network based on the first set of training images, wherein the at least one first neural network comprises a global pooling layer;
- creating at least one second set of training images, wherein the at least one second set of training images comprises training images in which features on at least one component were not correctly detected by the at least one first neural network;
- training (108) at least one second neural network based on the at least one second set of training images, wherein the at least one second neural network comprises a global pooling layer and recognizable features are marked on the training images of the second set of training images or image sections of the training images comprising a recognizable feature are assigned to corresponding feature classes;
- combining the at least one first neural network and the at least one second neural network into a plurality of neural networks, wherein the step of combining the at least one first neural network and the at least one second neural network into a plurality of neural networks further comprises assigning a first weighting with which a result of an analysis with the at least one first neural network is evaluated; and assigning at least a second weighting with which a result of an analysis with the at least one second neural network is evaluated.

9. The method (100) according to claim 8, wherein the training (105) of the at least one first neural network and/or the training (108) of the at least one second neural network is performed using supervised learning.

10. The method (100) according to any one of claims 8 or 9, wherein
- the features not correctly detected by the at least one first neural network comprise such features which were detected by means of the at least one first neural network, although a corresponding location of an associated training image is not marked and a component mapped in the associated training image has no feature at this location, and/or
- the features not correctly detected by the at least one first neural network comprise features which were not detected by means of the at least one first neural network, although a corresponding location of an associated training image is marked and a component depicted in the associated training image has a feature at this location, and/or
- the features not correctly detected by the at least one first neural network comprise such features which were detected by means of the at least one first neural network, although a corresponding location of an associated training image is not marked but a component depicted in the associated training image has a feature at this location.

11. A device (1) for analyzing a surface of a component (2), wherein the device (1) is adapted to perform the method (200) according to any one of claims 1 to 7.

12. An apparatus (1) for training a system for analyzing a surface of a component (2), the apparatus (1) being adapted to perform the method (100) according to any one of claims 8 to 10.

13. A computer program comprising instructions which, when the computer program is executed by a computer, cause the computer to perform the method (100, 200) according to any one of claims 1 to 7 or 8 to 10.

14. A computer readable storage medium comprising the computer program according to claim 13.

## Revendications

1. Procédé (200) d'analyse d'un composant au moyen d'un système entraîné conformément au procédé (100) selon l'une quelconque des revendications 8 à 10, le procédé (200) comprenant les étapes suivantes :
- réception d'une image du composant ;
- effectuer (203) une reconnaissance de caractéristiques sur l'image reçue au moyen d'une pluralité de réseaux neuronaux, les caractéristiques reconnues comprenant des défauts sur une surface ou à l'intérieur du composant ou des structures de surface sur le composant, au moins un premier réseau neuronal de la pluralité de réseaux neuronaux étant entraîné, selon l'une quelconque des revendications 8 à 10, sur la base d'un premier ensemble d'images d'entraînement, au moins un deuxième réseau neuronal de la pluralité de réseaux neuronaux étant entraîné, selon l'une quelconque des revendications 8 à 10, sur la base d'un deuxième ensemble d'images d'entraînement, et ledit au moins un premier réseau neuronal et ledit au moins un deuxième réseau neuronal comprennent chacun une couche de regroupement global ; et
- afficher (205) un résultat de la reconnaissance de caractéristiques par rapport à une représentation du composant, les caractéristiques reconnues étant affichées de manière localisée par rapport à la surface ou à l'intérieur du composant.

2. Procédé (200) selon la revendication 1, dans lequel la représentation du composant par rapport à laquelle le résultat de la reconnaissance de caractéristiques est affiché est l'image reçue du composant.

3. Procédé (200) selon l'une des revendications 1 ou 2, dans lequel, pour afficher le résultat de la reconnaissance de caractéristiques, on utilise un procédé de représentation de probabilités calculées au moyen de réseaux neuronaux, en particulier un procédé de cartographie d'activation de classe.

4. Procédé (200) selon l'une quelconque des revendications 1 à 3, dans lequel au moins une partie de l'image reçue est augmentée avant ou pendant l'étape de réalisation (203) de la reconnaissance de caractéristiques, dans lequel, lors de l'augmentation, ladite au moins une partie de l'image reçue est représentée sous une autre forme, et l'augmentation comprend une rotation, une réflexion ou l'application d'un filtre à ladite au moins une partie de l'image reçue.

5. Procédé (200) selon l'une quelconque des revendications 1 à 4, dans lequel l'image reçue du composant est en outre utilisée pour entraîner davantage au moins un réseau neuronal de la pluralité de réseaux neuronaux.

6. Procédé (200) selon l'une quelconque des revendications 1 à 5, dans lequel, si une taille de l'image reçue ne correspond pas à une taille d'entrée dudit au moins un premier et/ou dudit au moins un deuxième réseau neuronal, l'image reçue est divisée en une pluralité de sections d'image avant l'étape de réalisation (203) de la reconnaissance de caractéristiques.

7. Procédé (200) selon l'une quelconque des revendications 1 à 6, dans lequel, à l'étape de réalisation (203) de la reconnaissance de caractéristiques, une première reconnaissance de caractéristiques est effectuée avec ledit au moins un premier réseau neuronal et une deuxième reconnaissance de caractéristiques est effectuée avec ledit au moins un deuxième réseau neuronal, et les résultats de la première reconnaissance de caractéristiques et de la deuxième reconnaissance de caractéristiques sont pondérés en pourcentage afin de calculer le résultat de la reconnaissance de caractéristiques.

8. Procédé (100) d'apprentissage d'un système d'analyse d'un composant, le procédé comprenant les étapes consistant à :
- la création d'un premier ensemble d'images d'apprentissage, le premier ensemble d'images d'apprentissage comprenant des images d'apprentissage qui montrent au moins une partie d'au moins un composant et des caractéristiques reconnaissables sur le au moins un composant dans les images d'apprentissage du premier ensemble étant marquées par étiquetage, les caractéristiques comprenant des défauts sur une surface ou à l'intérieur du composant ou des structures de surface sur le composant ;
- l'apprentissage (105) d'au moins un premier réseau neuronal sur la base du premier ensemble d'images d'apprentissage, ledit au moins un premier réseau neuronal comprenant une couche de regroupement global ;
- la création d'au moins un deuxième ensemble d'images d'entraînement, ledit au moins un deuxième ensemble d'images d'entraînement comprenant des images d'entraînement dans lesquelles des caractéristiques sont associées à des au moins un composant n'ont pas été correctement détectées par le au moins un premier réseau neuronal ;
- l'apprentissage (108) d'au moins un deuxième réseau neuronal sur la base de l'au moins un deuxième ensemble d'images d'apprentissage, l'au moins un deuxième réseau neuronal présentant une couche de regroupement global et des caractéristiques reconnaissables étant marquées sur les images d'apprentissage du deuxième ensemble d'images d'apprentissage ou des sections d'images des images d'apprentissage qui présentent une caractéristique reconnaissable étant affectées à des classes de caractéristiques correspondantes ;
- combiner ledit au moins un premier réseau neuronal et ledit au moins un deuxième réseau neuronal en une pluralité de réseaux neuronaux, dans lequel ladite étape de combinaison dudit au moins un premier réseau neuronal et dudit au moins un deuxième réseau neuronal en une pluralité de réseaux neuronaux comprend en outre : l'attribution d'une première pondération avec laquelle un résultat d'une analyse avec ledit au moins un premier réseau neuronal est évalué ; et l'attribution d'au moins une deuxième pondération avec laquelle un résultat d'une analyse avec ledit au moins un deuxième réseau neuronal est évalué.

9. Procédé (100) selon la revendication 8, dans lequel l'apprentissage (105) dudit au moins un premier réseau neuronal et/ou l'apprentissage (108) dudit au moins un deuxième réseau neuronal est réalisé par apprentissage supervisé.

10. Procédé (100) selon l'une des revendications 8 ou 9, dans lequel
- les caractéristiques qui ne sont pas correctement détectées par l'au moins un premier réseau neuronal comprennent des caractéristiques qui ont été détectées au moyen de l'au moins un premier réseau neuronal, bien qu'un emplacement correspondant d'une image d'apprentissage associée ne soit pas marqué et qu'un composant représenté dans l'image d'apprentissage associée ne présente aucune caractéristique à cet emplacement, et/ou
- les caractéristiques qui ne sont pas correctement détectées par le au moins un premier réseau neuronal comprennent des caractéristiques qui n'ont pas été détectées au moyen du au moins un premier réseau neuronal, bien qu'un emplacement correspondant d'une image d'apprentissage associée soit marqué et qu'un composant représenté dans l'image d'apprentissage associée présente une caractéristique à cet emplacement, et/ou
- les caractéristiques qui ne sont pas correctement détectées par le au moins un premier réseau neuronal comprennent des caractéristiques qui ont été détectées au moyen du au moins un premier réseau neuronal, bien qu'un emplacement correspondant d'une image d'apprentissage associée ne soit pas marqué mais qu'un composant représenté dans l'image d'apprentissage associée présente une caractéristique à cet emplacement.

11. Dispositif (1) d'analyse d'une surface d'un composant (2), le dispositif (1) étant agencé pour mettre en œuvre le procédé (200) selon l'une quelconque des revendications 1 à 7.

12. Dispositif (1) d'apprentissage d'un système d'analyse d'une surface d'un composant (2), le dispositif (1) étant adapté pour mettre en œuvre le procédé (100) selon l'une des revendications 8 à 10.

13. Programme informatique comprenant des instructions qui, lorsque le programme informatique est exécuté par un ordinateur, amènent ce dernier à mettre en œuvre le procédé (100, 200) selon l'une des revendications 1 à 7 ou 8 à 10.

14. Support de stockage lisible par ordinateur comprenant le programme d'ordinateur selon la revendication 13.
